Europäisches Patentamt

European Patent Office

Office européen des brevets

(11) Publication number: **0 369 952**
**A1**

## EUROPEAN PATENT APPLICATION

(21) Application number: **89830479.5**

(22) Date of filing: **06.11.89**

(51) Int. Cl.5: **F16J 15/32**

(30) Priority: **15.11.88 IT 5353088 U**

(43) Date of publication of application:
**23.05.90 Bulletin 90/21**

(84) Designated Contracting States:
**DE ES FR GB SE**

(71) Applicant: **FIAT AUTO S.p.A.**
**Corso Giovanni Agnelli 200**
**I-10135 Torino(IT)**

(72) Inventor: **Ricordi, Eppo**
**Corso Antony 31**
**I-10100 - Collegno (Torino)(IT)**
Inventor: **Mussetto, Domenico**
**Corso Onorio Lisa 5Bis**
**I-10100 - Cambiano (Torino)(IT)**

(54) **Fluid sealing system.**

(57) A fluid sealing system on the seats of plugs or seals for rotating or axially sliding shafts, in particular of internal combustion engines, consisting of a seal seat (2) and a metallic cup (6) equipped with an elastomer addition both inside and outside, driven into the said seat coaxially with the engine shaft, both the cup (6) and the seat (2) have two different diameters (3,4-7,8), substantially identical two by two, the first providing a holding action, the second a sealing action.

Fig.1

## Fluid sealing system

This invention is concerned with a fluid sealing system for plugs or seal seats on rotating or axially sliding shafts, in particular on drive shafts of internal combustion engine.

The existing sealing systems are represented by a seal consisting of a metallic cup on which is vulcanized an elastomer section which, by coming in contact with the rotating shaft, prevents lubricant fluid from escaping.

The above cup has two different outside diameters and the smaller diameter is covered with a suitably shaped elastomer which causes the outside diameter in this area to have a value considerably higher than the size of the larger diameter of the cup.

The cup is then driven into a seal seat normally machined on an internal combustion engine cover, coaxially with the rotating shaft center-line; the external elastomer section provides a sealing action between the seal seat in the engine cover and the external wall of the cup.

However, in a system of this type, it may happen that during the driving in of the cup into the cover, if the operation is not correctly performed, axial scratches are created on the cylindrical wall of the seal seat which jeopardize the sealing action of the system even though the cup is equipped with elastomer on its smaller diameter, as the elastomer is not capable of matching the roughness of the axial scratches.

The purpose of the present invention is to prevent this drawback in a simple and cost effective manner.

The above purpose is achieved by the present invention providing a fluid sealing system on the seats of plugs or seals for rotating or axially sliding shafts, in particular of internal combustion engines, consisting of a seal seat and a metallic cup equipped with an elastomer addition both inside and outside, driven into the said seat coaxially with the engine shaft, characterized by the fact that both the cup and the seat have two different diameters, substantially identical two by two.

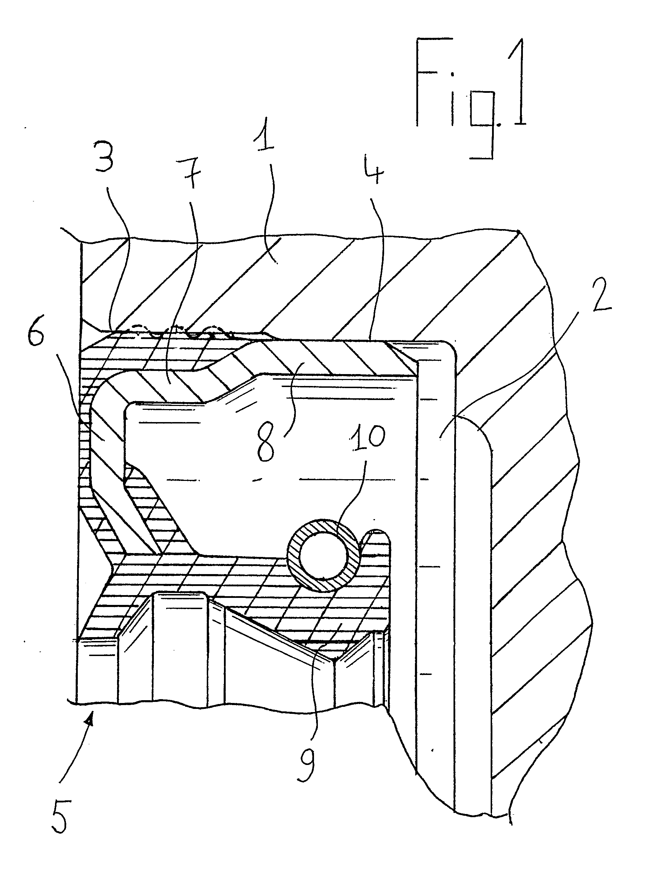

Additional characteristics and advantages of the invention will become apparent from the following description referred to the attached drawing provided by way of non-limitative example and showing a cross section of the invention along the shaft centerline.

With reference to the figure, 1 is a cover of an internal combustion engine cylinder block at the point where the main bearings supporting the two ends of the rotating shaft are located. In cover 1 is machined a seal seat 2 coaxial with the bearing centerline and thus coaxial with the drive shaft.

The seal seat 2 has two different diameters 3 and 4 machined using one and the same tool suitably shaped to avoid relative coaxially and roundness errors; in particular, the first half, approximately, starting from the outside, has a diameter which is greater than the second half.

Inside seal seat 2 is driven a seal 5 for rotating shafts consisting of a metallic cup 6 having two different diameters 7 and 8 of which the greater is substantially equal to the smaller diameter of seal seat 2. The said cup 6 has in its inside an elastomer section of a known type 9 equipped with a holding metallic ring 10 and thus suitable for ensuring a sealing action on rotating shafts.

The elastomer section has an addition which extends to cover the external surface of cup 6, in particular it covers the smaller diameter area, in such a way that it creates a uniform surface having an outside diameter substantially equal to the greater diameter 3 of seal seat 2.

In addition, on the external surface there are some circular crown shaped projections which by interacting with the internal surface of seal seat 2 enhance the sealing action of the system.

From the above description it can be easily understood that when the cup 6 is driven into the seal seat 2 using known techniques it cannot damage the surface of the first half of the seal seat because its greater diameter is smaller than the diameter of the said first half.

As a result, the elastomer section, as the driving in of the seal continues, will come in contact with a surface which has remained undamaged, and thus the results set for this invention are achieved.

The driving in of the cup itself is facilitated due to the fact that, during the first part of the travel, the two diameters are not in contact with each other.

## Claims

1. A fluid sealing system on the seats of plugs or seals for rotating or axially sliding shafts, in particular of internal combustion engines, consisting of a seal seat and a metallic cup equipped with an elastomer addition both inside and outside, driven into the said seat coaxially with the shaft, characterized by the fact that both the cup and the seat have two different diameters, substantially identical two by two, with the purpose of creating two couplings, the first of which has the role of providing a mechanical axial holding action for the plug or seal for rotating shafts, the second of which has mainly the role of providing a sealing action for any oil leaking past the first coupling.

Fig.1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DE-C-3 405 513 (GOETZE) <br> * The whole document * <br> --- | 1 | F 16 J 15/32 |
| A | FR-A-2 354 494 (GOETZE) <br> * The whole document * <br> ----- | 1 | |

TECHNICAL FIELDS
SEARCHED (Int. Cl.5)

F 16 J
F 16 B

The present search report has been drawn up for all claims

| Place of search | Date of completion of the search | Examiner |
|---|---|---|
| THE HAGUE | 14-02-1990 | LEGER M.G.M. |

EPO FORM 1503 03.82 (P0401)